# EUROPÄISCHE PATENTSCHRIFT

(11) **EP 2 254 769 B1**
(45) Veröffentlichungstag und Bekanntmachung des Hinweises auf die Patenterteilung: **28.10.2015**
(21) Anmeldenummer: 09721637.8
(22) Anmeldetag: 27.01.2009
(51) Int. Cl.: B60N 2/22

(54) **BESCHLAG**
FITTING
FERRURE

(30) Priorität: 15.03.2008 DE 202008003706 U
(43) Veröffentlichungstag der Anmeldung: 01.12.2010
(73) Patentinhaber: Brose Fahrzeugteile GmbH & Co. Kommanditgesellschaft, Coburg, 96450 Coburg (DE)
(72) Erfinder: ZELLMANN, Michael, 96120 Bischberg (DE); STEFFEN, Oliver, 96450 Coburg (DE); FASSBENDER, Frank, 96450 Coburg (DE)
(74) Vertreter: FDST Patentanwälte
(86) Internationale Anmeldenummer: PCT/EP2009/000493
(87) Internationale Veröffentlichungsnummer: WO 2009/115161

(56) Entgegenhaltungen:
- EP-A- 1 055 550
- EP-A- 1 676 502
- EP-A- 1 806 072
- JP-A- 2001 162 388
- US-A- 3 960 048

## Beschreibung

Die Erfindung betrifft einen Beschlag mit einem ersten Beschlagteil und mit einem relativ zum ersten Beschlagteil um eine Drehachse drehbaren zweiten Beschlagteil, wobei die beiden Beschlagteile mittels eines Halterings in axialer Richtung drehbeweglich zueinander gehalten sind. Ein solcher Beschlag eignet sich insbesondere zur Einstellung der Lehnenneigung an einem Fahrzeugsitz

Ein Beschlag der genannten Art ist beispielsweise aus der EP 0 720 930 A1 bekannt. Gemäß diesem Stand der Technik ist eine zwischen den Beschlagteilen angeordnete Verriegelungsvorrichtung zu einem Ver- und Entriegeln der Beschlagteile zueinander vorgesehen. Die Verriegelungsvorrichtung umfasst mehrere an dem ersten Beschlagteil in radialer Richtung verschiebbar geführte Sperr-Riegel, die zwischen einer Sperrposition, in welcher ein Gesperre mit dem zweiten Beschlagteil ausgebildet ist, und einer Löseposition bewegt werden können. Zur Betätigung des Beschlags werden mittels einer geeigneten Betätigungsvorrichtung die Sperr-Riegel aus ihrer jeweiligen Sperrposition in die Löseposition bewegt. Anschließend werden die Beschlagteile, insbesondere durch eine dann ermöglichte Neigungsverstellung der angebundenen Lehne, zueinander bis zum Erreichen einer gewünschten Zielposition gedreht. Entfällt die Wirkung der Betätigungsvorrichtung, so kehren die Sperr-Riegel infolge der mechanischen Vorspannung in die Sperrposition zurück, so dass die beiden Beschlagteile nun in der Zielposition wieder verriegelt sind. Die Lehnenneigung ist verstellt und verriegelt.

Gemäß der EP 0 702 930 A1 ist ein radial außen sitzender Haltering vorgesehen, der mittels radial nach innen gebogenen Rändern die beiden Beschlagteile in axialer Richtung zusammen hält.

Zur Verbesserung der Herstellung eines solchen Beschlags ist aus der DE 101 05 282 B4 bekannt, ein Beschlagteil mittels einer Presspassung in den Haltering einzufügen. Für eine definierte axiale Positionierung ist hierbei am Haltering eine Schulter vorgesehen, bis zu welcher das Beschlagteil eingepresst wird.

Auch aus der DE 20 2004 010 645 U1 ist ein Beschlag der eingangs genannten Art bekannt, wobei im Zuge einer verbesserten Herstellung ein sitzteilfester Adapter direkt dem Haltering oder einem Beschlagteil angeschweißt ist. Auch ist aus diesem Stand der Technik bekannt, den Haltering mit dem Beschlagteil zu verschweißen, mit welchem der Adapter verbunden ist.

Aus der DE 10 2007 021 022 A1 ist ein Beschlag bekannt, wobei der Haltering einem Beschlagteil über eine axiale Grenzfläche angeschweißt ist, und der andere Beschlagteil unter einer Radialspannung gehalten wird.

Aus EP 1 676 502 A ist ein Beschleg offenbart, der alle Merkmale des Oberbegriffs der Ansprüche 1 und 11 enthält.

Aufgabe der Erfindung ist es, einen Beschlag der eingangs genannten Art hinsichtlich seiner Herstellung weiter zu verbessern. Weiter ist es eine Aufgabe der Erfindung, ein vereinfachtes Herstellungsverfahren für einen derartigen Beschlag anzugeben.

Die erstgenannte Aufgabe wird für einen Beschlag, insbesondere für einen Fahrzeugsitz, der ein erstes Beschlagteil und ein relativ zum ersten Beschlagteil um eine Drehachse drehbares zweites Beschlagteil aufweist, wobei die beiden Beschlagteile mittels eines Halterings in axialer Richtung drehbeweglich zueinander gehalten sind, erfindungsgemäß dadurch gelöst, dass der Haltering axial das zweite Beschlagteil übergreift und dort fest mit dem zweiten Beschlagteil verbunden ist und mittels eines in die Radialrichtung einwärts abgewinkelten Anschlags das erste Beschlagteil gegen das zweite Beschlagteil vorspannt.

Die Erfindung dabei von der Tatsache aus, dass bei einem Beschlag gemäß Stand der Technik, wobei ein radial abgebogener Rand des Halterings ein Beschlagteil oil umschließt, ein an sich unbefriedigendes Spiel des umschlossenen Beschlagteils aufweist. Diese liegt zum einen an herstellungsbedingten Toleranzen und zum anderen an dem Prozess des Umbiegens des abgewinkelten Randes, auch Umbördeln genannt. Auf der anderen Seite wird das Spiel des beweglichen Beschlagteils bei bekannten Beschlägen geometrisch dadurch definiert, dass in den Haltering eine umlaufende Schulter eingebracht ist, gegen die sich das andere Beschlagteil axial abstützt. Auf diese Weise kann sich das vom abgebogenen Rand umfasste Beschlagteil mit Spiel gegenüber dem anderen Beschlagteil bewegen. Das vorhandene Spiel wird dann weiter dadurch reduziert, dass beispielsweise zwischen dem abgebogenen Rand und dem entsprechenden Beschlagteil ein Kunststoffring eingelegt wird. Auch ist es bekannt, in den abgebogenen Ring oder Bördelring mittels Körnung definiert Körnerspitzen einzuschlagen, um damit das geometrisch vorgegebene Spiel weiter zu reduzieren und dem Beschlagteil eine definierte Auflagefläche zur Verfügung zu stellen.

In überraschender Art und Weise löst sich nun die Erfindung von dieser aufwändigen Praxis, indem für den Haltering ein gegen die Radialrichtung einwärts abgewinkelter Anschlag vorgesehen ist, der das erste Beschlagteil gegen das zweite Beschlagteil vorspannt. Mit anderen Worten wird der Haltering mit einem überstreckten Rand oder Anschlag ausgebildet, der über die radiale Richtung hinaus einwärts in Richtung des zu haltenden Beschlag teils abgebogen ist. Die vorhandene Materialelastizität des Halterings kann hierdurch zum Erzeugen einer gegen das Beschlagteil gerichteten Feder- oder Haltekraft ausgenutzt werden, wodurch das Beschlagteil spielfrei definiert zwischen dem abgewinkelten Anschlag und dem anderen Beschlagteil geführt ist. Die Haltekraft kann dabei kraft- oder weggesteuert abhängig von dem Differenzwinkel des Anschlags zwischen seiner Ruheposition und der vorgespannten Position definiert eingestellt werden.

Durch den überstreckten Anschlag wird stets ein gleichbleibendes Axial-Spiel des Beschlagteils gewährleistet. Unabhängig von gegebenen Bauteiltoleranzen lässt sich eine gleichmäßige Vorspannung zwischen den Beschlagteilen erreichen. Dadurch, dass der Haltering den zweiten Beschlagteil axial übergreift, wird eine einfache Befestigung des Halterings an dem zweiten Beschlagteil in der gewünschten vorgespannten Position ermöglicht. Insbesondere ermöglicht diese Ausgestaltung eine einstellbare Vorspannung, da die Position des Halterings gegenüber den Beschlagteilen axial veränderbar ist. Der Haltering kann in axialer Richtung über das zweite Beschlagteil hindemisfrei geführt werden.

Der angegebene Beschlag bietet gegenüber einem Beschlag des Standes der Technik den weiteren Vorteil eines wesentlich vereinfachten Herstellungsverfahrens. Die diesbezügliche Aufgabe wird für ein Verfahren zur Herstellung eines Beschlags mit den angegebenen Merkmalen erfindungsgemäß dadurch gelöst, dass der Haltering in axialer Richtung beiden Beschlagteilen bis zum Erreichen einer gewünschten Endposition, in welcher der Anschlag des Halterings dem ersten Beschlagteil unter einer axialen Spannung anliegt, aufgeschoben und in dieser Endposition der Haltering mit dem zweiten Beschlagteil gefügt wird.

In einfacher Art und Weise wird der Haltering über das erste und das zweite Beschlagteil geschoben bzw. die Beschlagteile in den Haltering eingesetzt, und anschließend unter Aufbringung einer elastischen Gegenspannung der überstreckte Anschlag gegen das erste Beschlagteil bzw. beide aufeinanderliegende Beschlagteile gegen den Anschlag gepresst, und abschließend der Haltering in dieser vorgespanten Position mit dem zweiten Beschlagteil fest verbunden. Gegenüber den bisherigen Herstellverfahren stellt dies eine wesentliche Vereinfachung dar.

Die gewünschte Endposition ist hierdurch durch die gewollte, auf das erste Beschlagteil wirkende Gegenkraft des Anschlags vorgegeben. Diese aus der Materialelastizität resultierende Gegenkraft des Halterings steigt an, je weiter das erste Beschlagteil gegen den Anschlag bis hin zu dessen radialer Ausrichtung geschoben wird. Insofern kann eine Endposition mit der gewünschten Gegenspannung durch den überstreckten Anschlag insbesondere dadurch erreicht werden, dass der Haltering weggesteuert bis zum Erreichen einer vorgegebenen Relativlage gegenüber dem ersten Beschlagteil verfahren wird.

Vorteilhafterweise wird der Haltering in axialer Richtung kraftgesteuert bis zum Erreichen einer vorgegebenen Gegenkraft aufgeschoben. Diesem Verfahren äquivalent kann selbstverständlich auch das erste Beschlagteil bzw. beide Beschlagteile gemeinsam kraftgesteuert gegen den Anschlag des Halterings verschoben werden. Auf diese Weise lässt sich unabhängig von Fertigungstoleranzen eine definierte Vorspannung der beiden Beschlagteile zueinander erreichen. Die erreichbare Vorspannung hängt insbesondere von den für den Haltering verwendeten Materialien ab. So lässt sich mit einem weicheren Material insgesamt eine geringe Gegenkraft erzielen als mit einem härteren Material. Über die Materialauswahl kann insofern eine Einstellung der Gegenkraft oder Vorspannung über einen weiten Bereich variiert und je nach Anwendungsfall des Beschlags angepasst werden.

Als Felge der gegebenen Geometrie eines überstreckten Anschlags resultiert bei einer kraftgesteuerten Bewegung des ersten Beschlagteils gegenüber dem Haltering eine maximale Gegenkraft für den Fall, dass der Anschlag aus seiner Überstreckung bis zur Radialrichtung zurückgebogen ist. In dieser Position sind nämlich der Anschlag und die Anlagefläche des ersten Beschlagteils annähernd parallel ausgerichtet. Dieser Anstieg der Gegenkraft bis zu einem Maximalbetrag eröffnet die Möglichkeit einer vergleichsweise einfachen Kalibrierung der relativen Lage zwischen dem ersten Beschlagteil und dem Haltering. Um eine gewünschte Endposition zu erzielen, wird insofern gemäß einer weiter bevorzugten Variante der Haltering kraftgesteuert bis zum Erreichen einer vorgegebenen Maximalkraft aufgeschoben und anschließend in umgekehrter Bewegungsrichtung bis zur Endposition zurückbewegt. Diese Endposition kann nun ihrerseits wiederum über eine definierte Gegenkraft vorgegeben sein, so dass die Zurückbewegung kraftgesteuert erfolgt. Andererseits kann als Folge der Kalibrierung die Endposition auch über eine vorgegebene Strecke definiert sein, bis zu welcher der Haltering zurückbewegt wird. Auch auf diese Weise wird bei der Herstellung eine definierte Gegenkraft durch den Anschlag und somit eine definierte Vorspannung zwischen den Beschlagteilen erzielt.

Durch den überstreckten Anschlag ergibt sich weiter eine erhöhte Crashfestigkeit für den Beschlag. Wird der Beschlag nämlich in axialer Richtung belastet, so wird der Anschlag aus seiner Überstreckung zunächst bis in die Radialrichtung zurückgebogen. Bei einer weiteren Verbiegung wandert die Berührstelle zwischen dem Anschlag und dem Beschlagteil radial nach außen, so dass sich der wirksame Hebelarm mit zunehmender Verbiegung verkürzt. Dadurch erhöht sich aber die zu einer weiteren Verformung aufzubringende Kraft. Der Beschlag hält zunehmend der eingeleiteten Kraft stand.

Die Befestigung des definiert vorgespannten Halterings an dem zweiten Beschlagteil kann grundsätzlich durch verschiedene Fügemethoden erfolgen. Allerdings muss dabei darauf geachtet werden, dass durch die angewendete Fügemethode die eingestellte Vorspannung des Halterings gegenüber dem ersten Beschlagteil nicht verloren geht. Insofern dürfte ein Umbördeln des dem zweiten Beschlagteil überschoben Halterings eher ausscheiden. Hingegen kann der vorgespannte Haltering vorteilhaft dem zweiten Beschlagteil angeschweißt werden. Grundsätzlich ist auch ein Durchsetzfügen, ein Verschrauben oder ein Verkleben vorstellbar.

In einer bevorzugten Ausgestaltung wird der Haltering in der Endposition mit dem zweiten Beschlagteil laserverschweist. Mittels dieses inzwischen verbreiteten Schweißverfahrens lässt sich eine exakte Schweißnaht herstellen. Insbesondere kann der Haltering mit dem zweiten Beschlagteil mittels einer den Haltering zumindest teilweise umlaufenden Radialnaht laserverschweist werden. Dazu wird der Laserstrahl radial gegen den Haltering gerichtet und um den Beschlag herumgeführt bzw. der Beschlag um die Drehachse bei feststehendem Laserstrahl gedreht. Dabei entsteht eine sich in radialer Richtung vom Haltering in das zweite Beschlagteil hinein erstreckende, den Beschlag zumindest abschnittsweise umlaufende Durchschweißnaht.

In einer Alternative oder zusätzlich wird die Laserschweißung bevorzugt unter Ausbildung einer Kehlnaht am Rand des Halterings ausgeführt. Eine solche Kehlnaht lässt größere Radialtoleranzen zwischen dem Haltering und dem zweiten Beschlagteil zu. Zudem kann sie im Vergleich zu einer Radialnaht höhere Kräfte übertragen. Allerdings birgt die Erzeugung einer Kehlnaht mittels Laserschweißung die Gefahr einer Durchschweißung, so dass im ungünstigsten Fall die Beschlagteile verbunden werden und somit der Beschlag unbrauchbar wird. Die Kehlnaht kann insofern auch mittels einer herkömmlichen Schweißtechnik erzeugt werden.

Durch Versuche hat sich herausgestellt, dass es zur Einstellung gewünschter Gegenkräfte durch den Anschlag genügt, wenn dieser gegenüber der Radialrichtung unter einem Winkel von weniger als 20° abgewinkelt ist. Über eine axiale Verschiebung des ersten Beschlagteils gegenüber dem Anschlag lässt sich dann für den Beschlag eine Vorspannung innerhalb eines idealen Bereiches einstellen.

Der Anschlag des Halterings als solcher kann grundsätzlich abschnittsweise und über den Umfang des Halterings verteilt ausgestaltet sein. So kann der Anschlag beispielsweise in Form mehrerer abgewinkelter Umfangsabschnitte vorliegen. In einer bevorzugten Ausgestaltung ist der Anschlag jedoch als ein umlaufender Bund ausgebildet. Insofern kann zur Herstellung des Halterings ein zusätzlicher Stanzvorgang entfallen. Zugleich ist hierdurch die Anlagefläche für das erste Beschlagteil gut definiert.

In einer besonders bevorzugten Ausführungsvariante weist der Haltering eine die beiden Beschlagteile zumindest abschnittsweise umlaufende, ebene Mantelfläche auf. Durch eine solch einfache Geometrie können die Herstellungskosten gegenüber bekannten Beschlägen weiter reduziert werden. Eine radiale Stufe des Halterings, an welcher sich das zweite Beschlagteil abstützt, ist für den hier angegebenen Haltering nicht mehr erforderlich. Die gewünschte Vorspannung der Halteteile zueinander wird durch die Fügung des bis in die Endposition den Beschlagteilen überschobenen Halterings mit dem zweiten Beschlagteil erzielt. Die Vorgabe eines Spiels zwischen dem ersten und dem zweiten Beschlagteil über eine geometrische Ausgestaltung des Halterings entfällt vollständig.

Vorteilhafterweise zeigt die gegen den Anschlag gerichtete Fläche des ersten Beschlagteils eine Mindestebenheit, insbesondere liegt die Ebenheit innerhalb eines Toleranzmaßes von weniger als 0,5 mm. Eine definierte Ebenheit ist dann erreicht, wenn die Bestimmungsfläche zwei zu ihr parallel verlaufende Flächen, die im Abstand des vorgegebenen Toleranzmaßes (hier weniger als 0,5 mm) angeordnet sind, nicht durchsticht. Durch das Vorsehen einer Mindestebenheit wird eine definierte Kontaktfläche des Anschlags gegenüber dem ersten Beschlagteil erzielt. Im Falle eines umlaufenden Bundes wird hierdurch zwischen dem Anschlag und dem ersten Beschlagteil eine gewisse Dichtfunktion erzielt, wodurch beispielsweise bei der Herstellung das Eindringen eines Tauchlackes zwischen die beiden Beschlagteile verhindert wird. Ist auch der Haltering beispielsweise mittels einer umlaufenden Schweißnaht gegen das zweite Beschlagteil gesichert, so ist die Problematik eines eindringenden Tauchlackes gänzlich beseitigt.

Vorteilhafterweise ist an der zum Anschlag gebildeten Innenschulter des Halterings eine Nut eingebracht. Eine solche Nut, auch als Freistich bezeichnet, erlaubt eine definierte Einstellung der durch den Anschlag gegen das erste Beschlagteil wirkenden Feder- bzw. Gegenkraft. Je tiefer der Freistich eingebracht wird, umso geringer wird die im ersten Beschlagteil entgegengesetzte Kraft durch den Anschlag sein. Weiter bietet eine solche Nut den Vorteil, dass gegebenenfalls vorhandene Gußgrate an den Ecken des ersten Beschlagteils nicht mehr aufwändig entfernt werden müssen. Die eingebrachte Nut bietet genügend Raum, ohne dass ein solcher Gussgrat zu einer Behinderung der Drehbewegung des ersten Beschlagteils wird. Auch durch den Entfall eines Entgratungsschrittes werden die Herstellungskosten verringert.

Die Nut kann spanlos oder spanend eingebracht werden. Es hat sich herausgestellt, dass eine Verrringerung der Wandstärke des Anschlags durch die Nut bis auf eine Restwandstärke zwischen 0,4 und 1 mm für die Einstellung der für den Beschlag gewünschten Gegenkräfte vorteilhaft ist.

Damit sich das erste Beschlagteil innerhalb des Halterings bewegen lässt, ist der Außendurchmesser des ersten Beschlagteils gegenüber dem Innendurchmesser des Halterings verringert. Um ein leichtes Aufschieben des Halterings über das zweite Beschlagteil zu ermöglichen, ist weiter zweckmäßigerweise zwischen dem zweiten Beschlagteil und dem Haltering ein Fügespalt gebildet. Je nach angedachter Fügemethode zwischen dem Haltering und dem zweiten Beschlagteil sollte der Fügespalt vorzugsweise innerhalb eines Bereiches zwischen 0,01 und 0,5 mm liegen. Eine mittels Schweißung angebrachte Kehlnaht zwischen dem Rand des Halterings und dem zweiten Beschlagteil toleriert derartige Spaltgrößen problemlos.

In einer zweckmäßigen Ausgestaltung ist eine Verriegelungsvorrichtung zu einem Verund Entriegeln der Beschlagteile zueinander vorgesehen. Diese Verriegelungsvorrichtung umfasst beispielsweise eine Anzahl von am zweiten Beschlagteil in radialer Richtung verschiebbar geführten Sperr-Riegeln, die in einer radial auswärts gelegenen Position ein Gesperre mit dem ersten Beschlagteil ausbilden. Werden die Sperr-Riegel beispielsweise mittels einer Kulissenscheibe radial nach innen gezogen, so werden die beiden Beschlagteile entriegelt und können dann gegeneinander verstellt werden. In der verstellten Position werden die Beschlagteile mittels der Sperr-Riegel dann wieder zueinander verriegelt.

Ein Ausführungsbeispiel der Erfindung wird anhand einer Zeichnung näher erläutert. Dabei zeigen:
- Fig. 1: in teilweise aufgebrochener Darstellung einen Beschlag mit einem Haltering, der eine ebene Mantelfläche aufweist und
- Fig. 2: in einem Querschnitt einen Teilaspekt des Beschlags gemäß Fig. 1.

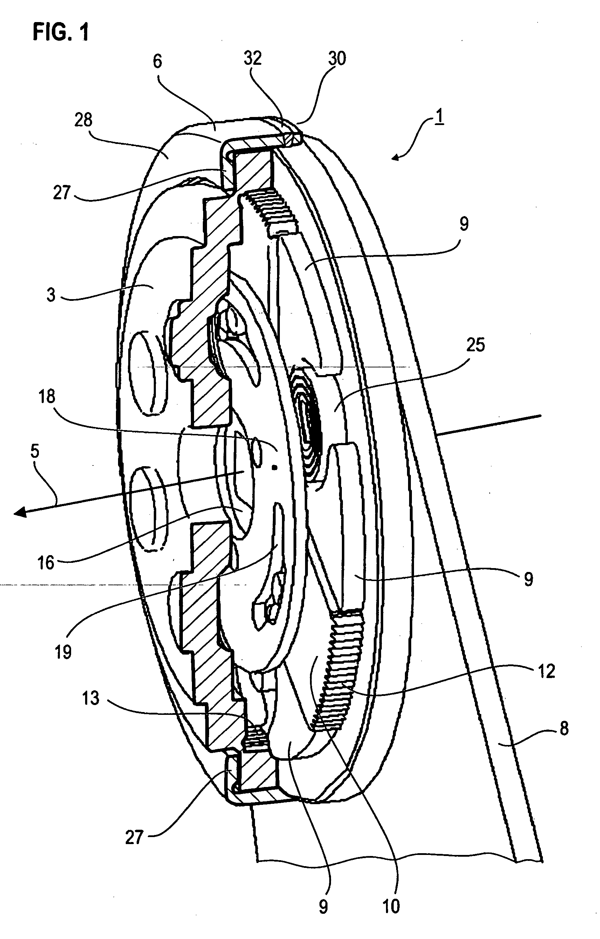

In Fig. 1 ist in einer teilweise aufgebrochenen Darstellung ein Beschlag 1 zur Verstellung der Lehne eines Fahrzeugsitzes gegenüber dem Sitzunterteil gezeigt. Der Beschlag 1 umfaßt ein erstes Beschlagteil 3 und ein hierzu relativ verdrehbares zweites Beschlagteil 4. Beide, im Wesentlichen scheibenförmige Beschlagteile 3,4 werden durch einen umlaufenden Haltering 6 in axialer Richtung zueinander gehalten. Es wird die ein Zylinderkoordinatensystem definierte Drehachse 5 ersichtlich, um die die beiden Beschlagteile 3,4 zueinander drehbeweglich sind. Das erste Beschlagteil 3 ist hierbei an der Lehne des Fahrzeugsitzes angebunden. Das zweite Beschlagteil 4 ist drehest mit einem Adapterblech 8 verbunden, welches dem Sitzunterteil zugeordnet ist.

Im Inneren des Beschlags 1 werden auf dem zweiten Beschlagteil 4 eine Reihe von Führungselementen 9 sichtbar, von denen jeweils zwei eine radiale Führungsbahn für einen dazwischen angeordneten Sperr-Riegel 10 bilden. Die insgesamt drei, in radialer Richtung verschiebbar gelagerten Sperr-Riegel 10 weisen auf ihrem radial außen liegenden Ende jeweils eine Anzahl von Sperr-Zähnen 12 auf, die in einer Sperrposition jeweils in eine Zahnung 13 an einem Innenumfang des ersten Beschlagteils 3 eingreifen. In der jeweils außen liegenden Sperrposition der Sperr-Riegel 10 bilden diese ein Gesperre gegenüber dem ersten Beschlagteil 3, so dass die beiden Beschlagteile 3,4 gegeneinander verriegelt sind. Der Beschlag 1 ist somit als ein Rastbeschlag ausgebildet.

Zur Betätigung des Beschlags 1 ist eine innenliegende, gegen die Sperr-Riegel 10 wirkende Exzenterscheibe 16 vorgesehen, die drehfest mit einer Kulissenscheibe 18 verbunden ist. Wird mittels eines nicht dargestellten Betätigungselements die Exzenterscheibe 16 in die vorgesehene Betätigungsrichtung gedreht, so entfällt ihre Wirkung gegen die Sperr-Riegel 10 und die Kulissenscheibe 18 zieht mittels entsprechender Kulissen 19 die Sperr-Riegel 10 jeweils mittels daran angeordneter Zapfen 21 radial nach innen. Damit wird das Gesperre zwischen den Sperr-Riegeln 10 und dem ersten Beschlagteil 3 entriegelt. Die Beschlagteile 3,4 können frei gegeneinander gedreht werden. Nach Entfall der Einwirkung auf die Exzenterscheibe 16 wird diese mittels der Federelemente 25 erneut gegen die Sperr-Riegel 10 gerichtet, wobei diese erneut in ihre radial außen liegende Sperrposition zurückkehren. Der Beschlag 1 ist in der verstellten Position verriegelt.

Der die beiden Beschlagteile 3, 4 in axialer Richtung (entlang der Drehachse 5) haltende Haltering 6 weist einen gegen das erste Beschlagteil 3 gerichteten Anschlag 27 auf, der gegen die Radialrichtung einwärts abgewinkelt ist. Der Anschlag 27 ist hierbei als ein umlaufender Bund 28 ausgeführt. Zur Herstellung des Beschlags 1werden die Beschlagteile 3,4 bis zum Erreichen einer gewünschten Gegenkraft kraftgesteuert gegen den Anschlag 27 geführt. In der durch die Gegenkraft definierten End position der Bauteile zueinander wird der Haltering 6 mit dem zweiten Beschlagteil 4 gefügt. Als Fügeverfahren ist eine Laserschweißung durchgeführt. Man erkennt in Fig. 1 eine hieraus resultierende Durchschweißnaht 32, die sich radial nach innen erstreckt und den ebenen Mantel des Halterings 6 fest mit dem zweiten Beschlagteil 4 verbindet.

Der Haltering 6 ist konstruktiv einfach ausgeführt. Er weist lediglich eine ebene Mantelfläche sowie den hierzu abgewinkelten Bund 28 auf. Der Bund 28 ist dabei gegen die Radialrichtung einwärts, d. h. in Richtung auf das erste Beschlagteil 3 hin abgewinkelt. Nach der Fügung des Halterings 6 mit dem zweiten Beschlagteil 4 sind die Beschlagteile 3, 4 zueinander mittels des abgewinkelten Bundes 28 mit einer definierten Vorspannung zueinander gehalten. Das erste Beschlagteil 3 kann spielfrei gegenüber dem zweiten Beschlagteil 4 gedreht werden. Hierzu ist gegenüber dem ersten Beschlagteil 3 und dem ebenen Mantel des Halterings 6 ein Radialspalt vorhanden. Um ein Aufschieben des Halterings 6 über die Beschlagteile 3,4 während der Herstellung zu ermöglichen, ist der Innendurchmesser des Mantels des Halterings 6 geringfügig gegenüber dem Außendurchmesser des zweiten Beschlagteils 4 vergrößert.

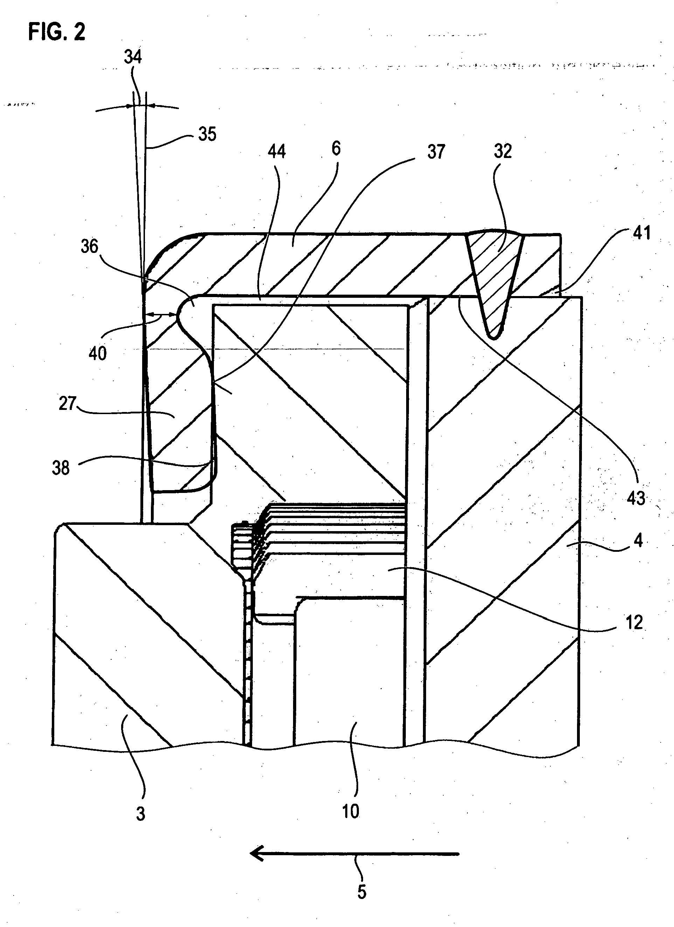

In Fig. 2 ist einer teilweise geschnittenen Darstellung ein Teilaspekt des Beschlags 1 gemäß Fig. 1 vergrößert dargestellt. Man erkennt wiederum die Beschlagteile 3 und 4, die mittels des Halterings 6 in axialer Richtung (entlang der Drehachse 5) zueinander gehalten sind.

Hierbei weist der Haltering 6 eine ebene Mantelfläche auf, gegenüber der ein Anschlag 27 überstreckt abgewinkelt ist. Der Winkel 34 des Anschlags 27 gegenüber der Radialrichtung im gezeigten vorgespannten Zustand beträgt etwa 3°. Zur Einstellung definierter Federelastizitäten ist an der Innenschulter des Halterings 6 zum Anschlag 27 eine Nut 36 eingebracht, die das Material des Anschlags 27 auf eine Restwandstärke 40 von etwa 0,8 mm reduziert, und dadurch eine gewünschte Gegenkraft des Anschlags 27 gegen das Beschlagteil 3 ermöglicht. Die Nut 36 erlaubt es zudem, dass ein Entgraten des ersten Beschlagteils 3 an dessen Kanten entfalten kann.

Durch die Übersreckung des Anschlags 27 bezüglich der Radialrichtung 35 entsteht zwischen dem Anschlag 27 und der Anlagefläche 37 des ersten Beschlagteils 3 eine definierte Berührstelle 38. In Folge der Gegenkraft durch den überstreckten Anschlag 27 erfährt das erste Beschlagteil 3 eine definierte Vorspannung gegenüber dem zweiten Beschlagteil 4. Das erste Beschlagteil 3 kann im Haltering 6 und gegenüber dem zweiten Beschlagteil 4 mit einer definierten Vorspannung spielfrei verdreht werden.

In der vorgespannten Position ist der Haltering 6 - wie bereits beschrieben - mittels einer Laserschweissung an das zweite Beschlagteil 4 gefügt. Es wird die aus Fig. 1 ersichtliche Durchschweißnaht 32 deutlich erkennbar, die mittels Laserschweißung hergestellt ist. Alternativ hierzu kann mittels Laserschweißung oder einem herkömmlichen Schweißverfahren eine umlaufende Kehlnaht 41 zwischen dem Rand des Halterings 6 und dem zweiten Beschlagteil 4 erzeugt werden. Eine solche Kehlnaht 41 lässt größere Radialtoleranzen zwischen dem Haltering 6 und dem zweiten Beschlagteil 4 zu. Außerdem können höhere Kräfte übertragen werden.

Um während der Herstellung den Haltering 6 leicht über das zweite Beschlagteil 4 sehieben zu können, ist zwisehen dem Haltering 6 und dem zweiten Beschlagteil 4 ein Fügespalt 43 vorgesehen. Im Falle der Fügung mittels einer Kehlnaht 41 kann dieser Fügespalt eine Dimension bis zu 0,5 mm aufweisen.

Der zur Bewegung des ersten Beschlagteils 3 in dem Haltering 6 notwendige Radialspalt 44 gegenüber dem Haltering 6 ist ebenfalls ersichtlich.

Weiter ist in Fig. 2 noch ein Sperr-Riegel 10 erkennbar, der in seiner Sperrposition mittels einer Verzahnung ein Gesperre mit dem ersten Beschlagteil 3 bildet. Die Sperrzähne 12 des Sperrriegels 10 sind hierbei erkennbar.

### Bezugszeichenliste

- 1: Beschlag
- 3: erstes Beschlagteil
- 4: zweites Beschlagteil
- 5: Drehachse
- 6: Haltering
- 8: Adapterblech
- 9: Führungselemente
- 10: Sperr-Riegel
- 12: Sperr-Zähne
- 13: Zahnung
- 16: Exzenterscheibe
- 18: Kulissenscheibe
- 19: Kulisse
- 21: Zapfen
- 25: Federelement
- 27: Anschlag oder Rand
- 28: Bund
- 30: Rand
- 32: Durchschweißnaht
- 34: Winkel
- 35: Radialrichtung
- 36: Nut
- 37: Anlagefläche
- 38: Berührstelle
- 40: Restwandstärke
- 41: Kehlnaht
- 43: Fügespalt
- 44: Fügespalt

## Patentansprüche

1. Beschlag (1) mit einem ersten Beschlagteil (3) und mit einem relativ zum ersten Beschlagteil (3) um eine Drehachse (5) drehbaren zweiten Beschlagteil (4), wobei die beiden Beschlagteile (3,4) mittels eines Halterings (6) in axialer Richtung drehbeweglich zueinander gehalten sind, wobei der Haltering (6) axial das zweite Beschlagteil (4) übergreift und dort fest mit dem zweiten Beschlagteil (4) verbunden ist und **dadurch gekennzeichnet, dass** der Haltering (6) mittels eines gegen die Radialrichtung (35) einwärts in Richtung des ersten Beschlagteils (3) abgewinkelten überstreckten Rands (27) das erste Beschlagteil (3) gegen das zweite Beschlagteil (4) vorspannt.

2. Beschlag (3) nach Anspruch 1,
**dadurch gekennzeichnet,**
**dass** der Rand (27) des Halterings (6) gegenüber der Radialrichtung (35) mit einem Winkel (34) von weniger als 20° abgewinkelt ist.

3. Beschlag (3) nach Anspruch 1 oder 2,
**dadurch gekennzeichnet,**
**dass** der Rand (27) als umlaufender Bund (28) ausgebildet ist.

4. Beschlag (3) nach einem der vorhergehenden Ansprüche,
**dadurch gekennzeichnet,**
**dass** der Haltering (6) eine die beiden Beschlagteile(3,4) zumindest abschnittsweise umlaufende ebene Mantelfläche aufweist.

5. Beschlag (3) nach einem der vorhergehenden Ansprüche,
**dadurch gekennzeichnet,**
**dass** die gegen den Rand (27) gerichtete Fläche des ersten Beschlagteils (3) im Bereich der Berührstelle eine Mindestebenheit aufweist, insbesondere die Ebenheit innerhalb eines Toleranzmaßes von weniger als 0,5 mm liegt.

6. Beschlag (3) nach einem der vorhergehenden Ansprüche,
**dadurch gekennzeichnet,**
**dass** an der zum Rand (27) gebildeten Innenschulter des Halterings (6) eine Nut (36) eingebracht ist.

7. Beschlag (3) nach einem der vorhergehenden Ansprüche,
**dadurch gekennzeichnet,**
**dass** zwischen dem zweiten Beschlagteil (4) und dem Haltering (6) ein Fügespalt (43) gebildet ist.

8. Beschlag (3) nach einem der vorhergehenden Ansprüche,
**dadurch gekennzeichnet,**
**dass** der Haltering (6) mit dem zweiten Beschlagteil (4) über eine Schweißnaht verbunden ist.

9. Beschlag (3) nach Anspruch 8,
**dadurch gekennzeichnet,**
**dass** die Schweißnaht (32) als eine den Haltering (6) zumindest abschnittsweise umlaufende Durchschweißnaht (32) ausgeführt ist.

10. Beschlag (3) nach einem der vorhergehenden Ansprüche,
**dadurch gekennzeichnet,**
**dass** eine Verriegelungsvorrichtung zu einem Ver- und Entriegeln der Beschlagteile (3,4) zueinander vorgesehen ist.

11. Verfahren zur Herstellung eines Beschlags (3,4) mit den Merkmalen gemäß einem der vorhergehenden Ansprüche,
**dadurch gekennzeichnet,**
**dass** der Haltering (6) in axialer Richtung beiden Beschlagteilen (3,4) bis zum Erreichen einer gewünschten Endposition, in welcher der gegen die Radialrichtung einwärts in Richtung des ersten Beschlagteils (3) abgewinkelte und überstreckte Rand (27) des Halterings (6) dem ersten Beschlagteil (3) unter einer axialen Spannung anliegt, aufgeschoben, und in dieser Endposition der Haltering (6) mit dem zweiten Beschlagteil (4) gefügt wird.

12. Verfahren nach Anspruch 11,
**dadurch gekennzeichnet,**
**dass** der Haltering (6) in axialer Richtung kraftgesteuert bis zum Erreichen einer vorgegebenen Gegenkraft aufgeschoben wird.

13. Verfahren nach Anspruch 11 oder 12,
**dadurch gekennzeichnet,**
**dass** der Haltering (6) kraftgesteuert bis zum Erreichen einer vorgegebenen Maximalkraft aufgeschoben und anschließend in umgekehrter Bewegungsrichtung kraftgesteuert bis zum Erreichen einer vorgegebenen Gegenkraft zurückbewegt wird.

14. Verfahren nach Anspruch 11 oder 12,
**dadurch gekennzeichnet,**
**dass** der Haltering (6) kraftgesteuert bis zum Erreichen einer vorgegebenen Maximalkraft aufgeschoben und anschließend in umgekehrter Bewegungsrichtung eine vorgegebene Strecke bis zur Endposition zurückbewegt wird.

15. Verfahren nach einem der Ansprüche 11 bis 14,
**dadurch gekennzeichnet,**
**dass** der Haltering (6) in der Endposition mit dem zweiten Beschlagteil (4) laserverschweißt wird.

16. Verfahren nach Anspruch 15,
**dadurch gekennzeichnet,**
**dass** die Laserschweißung unter Ausbildung einer den Haltering (6) zumindest teilweise umlaufenden Durchschweißnaht (32) ausgeführt wird.

## Claims

1. Fitting (1) having a first fitting part (3) and having a second fitting part (4) which is rotatable relative to the first fitting part (3)around a rotational axis (5), wherein the two fitting parts (3, 4) are held to be rotationally moveable in the axial direction with respect to each other by means of a retaining ring (6), wherein the retaining ring (6) overlaps the second fitting part (4) axially and is connected there firmly to the second fitting part (4),
**characterised in that** the first fitting part (3) is pre-tensioned against the second fitting part (4) by means of an overstretched edge (27) which is bent inwards in the direction of the first fitting part (3) against the radial direction (35).

2. Fitting (3) according to claim 1,
**characterised in that** the edge (27) of the retaining ring (6) is bent opposite to the radial direction (35) at an angle (34) of less than 20°.

3. Fitting (3) according to claim 1 or 2,
**characterised in that** the edge (27) is formed as a circumferential collar (28).

4. Fitting (3) according to one of the preceding claims,
**characterised in that** the retaining ring (6) has a flat shell surface which circulates the two fitting parts (3, 4) at least in sections.

5. Fitting (3) according to one of the preceding claims,
**characterised in that** the surface of the first fitting part (3) which is directed against the edge (27) has a minimum flatness in the region of the contact point, in particular the flatness lies within a tolerance threshold of less than 0.5mm.

6. Fitting (3) according to one of the preceding claims,
**characterised in that** a groove (36) is introduced on the inner shoulder of the retaining ring (6) formed towards the edge (27).

7. Fitting (3) according to one of the preceding claims,
**characterised in that** a joint gap (43) is formed between the second fitting part (4) and the retaining ring (6).

8. Fitting (3) according to one of the preceding claims,
**characterised in that** the retaining ring (6) is connected to the second fitting part (4) via a weld seam.

9. Fitting (3) according to claim 8,
**characterised in that** the weld seam (32) is designed as a through-weld seam (32) which circulates the retaining ring (6) at least in sections.

10. Fitting (3) according to one of the preceding claims,
**characterised in that** a locking device is provided for locking and unlocking the fitting parts (3, 4) to and from each other.

11. Method for the production of a fitting (3, 4) having the features according to one of the preceding claims,
**characterised in that** the retaining ring (6) is slid in the axial direction of both fitting parts (3, 4) until reaching a desired end position in which the overstretched edge (27) of the retaining ring (6) which is bent inwards in the direction of the first fitting part (3) against the radial direction abuts onto the first fitting part (3) under axial tension, and is joined to the second fitting part (4) in this end position of the retaining ring (6).

12. Method according to claim 11,
**characterised in that** the retaining ring (6) is slid in the axial direction in a force-controlled manner until reaching a predetermined counter force.

13. Method according to claim 11 or 12,
**characterised in that** the retaining ring (6) is slid in a force-controlled manner until reaching a predetermined maximum force and is subsequently moved backwards in the reverse movement direction in a force-controlled manner until reaching a predetermined counter force.

14. Method according to claim 11 or 12,
**characterised in that** the retaining ring (6) is slid in a force-controlled manner until reaching a predetermined maximum force and is subsequently moved backwards in the reverse movement direction by a predetermined stretch up to the end position.

15. Method according to claim 11 to 14,
**characterised in that** the retaining ring (6) is laser-welded to the second fitting part (4) in the end position.

16. Method according to claim 15,
**characterised in that** the laser welding is executed, forming a through-weld seam (32) which circulates the retaining ring (6) at least partially.

## Revendications

1. Mécanisme ou armature de réglage (1) comprenant une première pièce de mécanisme (3) et une deuxième pièce de mécanisme (4), qui peut être déplacée en rotation par rapport à la première pièce de mécanisme (3) autour d'un axe de rotation (5), les deux pièces de mécanisme (3, 4) étant maintenues dans la direction axiale de manière mobile en rotation l'une par rapport à l'autre, au moyen d'un anneau de maintien (6), l'anneau de maintien (6) surmontant axialement la deuxième pièce de mécanisme (4) en étant, à cet endroit, lié de manière fixe à la deuxième pièce de mécanisme (4),
**caractérisé**
**en ce que** l'anneau de maintien (6) assure une précontrainte de la première pièce de mécanisme (3) contre la deuxième pièce de mécanisme (4), au moyen d'une bordure (27) coudée par rapport à la direction radiale (35), en excès de contrainte, vers l'intérieur en direction de la première pièce de mécanisme (3).

2. Mécanisme de réglage (3) selon la revendication 1,
**caractérisé**
**en ce que** la bordure (27) de l'anneau de maintien (6) est coudée par rapport à la direction radiale (35) d'un angle (34) de moins de 20°.

3. Mécanisme de réglage (3) selon la revendication 1 ou la revendication 2,
**caractérisé**
**en ce que** la bordure (27) est réalisée sous la forme d'une collerette (28) périphérique.

4. Mécanisme de réglage (3) selon l'une des revendications précédentes,
**caractérisé**
**en ce que** l'anneau de maintien (6) présente une surface enveloppe plane entourant au moins partiellement la périphérie des deux pièces de mécanisme (3, 4).

5. Mécanisme de réglage (3) selon l'une des revendications précédentes,
**caractérisé**
**en ce que** la surface de la première pièce de mécanisme (3) dirigée vers la bordure (27) présente, dans la zone de contact, une planéité minimale, et notamment en ce que la planéité se situe à l'intérieur d'une valeur de tolérance de moins de 0,5 mm.

6. Mécanisme de réglage (3) selon l'une des revendications précédentes,
**caractérisé**
**en ce qu'**au niveau de l'épaulement intérieur de l'anneau de maintien (6) formé par rapport à la bordure (27), est réalisée une rainure (36).

7. Mécanisme de réglage (3) selon l'une des revendications précédentes,
**caractérisé**
**en ce qu'**entre la deuxième pièce de mécanisme (4) et l'anneau de maintien (6) est formé un joint d'assemblage (43).

8. Mécanisme de réglage (3) selon l'une des revendications précédentes,
**caractérisé**
**en ce que** l'anneau de maintien (6) est relié à la deuxième pièce de mécanisme (4) par l'intermédiaire d'un joint ou cordon soudé.

9. Mécanisme de réglage (3) selon la revendication 8,
**caractérisé**
**en ce que** le joint ou cordon soudé (32) est réalisé en tant que joint ou cordon soudé traversant (32) s'étendant de manière périphérique au moins par secteurs ou partiellement, autour de l'anneau de maintien (6).

10. Mécanisme de réglage (3) selon l'une des revendications précédentes,
**caractérisé**
**en ce qu'**il est prévu un dispositif de verrouillage pour verrouiller et déverrouiller les pièces de mécanisme (3, 4) l'une par rapport à l'autre.

11. Procédé de fabrication d'un mécanisme de réglage (3, 4) présentant les caractéristiques selon l'une des revendications précédentes,
**caractérisé**
**en ce que** l'on emmanche l'anneau de maintien (6), dans la direction axiale, sur les deux pièces de mécanisme (3, 4) jusqu'à atteindre une position terminale souhaitée, dans laquelle la bordure (27) de l'anneau de maintien (6), coudée par rapport à la direction radiale,
en excès de contrainte et vers l'intérieur en direction de la première pièce de mécanisme (3), se trouve en appui sous contrainte axiale contre la première pièce de mécanisme (3), et dans cette position terminale, on assemble l'anneau de maintien (6) avec la deuxième pièce de mécanisme (4).

12. Procédé selon la revendication 11,
**caractérisé**
**en ce que** l'on emmanche l'anneau de maintien (6) dans la direction axiale, en commandant la force, jusqu'à atteindre une force antagoniste prédéterminée.

13. Procédé selon la revendication 11 ou la revendication 12,
**caractérisé**
**en ce que** l'on emmanche l'anneau de maintien (6) en commandant la force, jusqu'à atteindre une force maximale prédéterminée, et on le déplace ensuite selon une direction de mouvement inverse, en commandant la force, jusqu'à atteindre une force antagoniste prédéterminée.

14. Procédé selon la revendication 11 ou la revendication 12,
**caractérisé**
**en ce que** l'on emmanche l'anneau de maintien (6) en commandant la force, jusqu'à atteindre une force maximale prédéterminée, et on le déplace ensuite selon une direction de mouvement inverse, sur une distance prédéterminée jusqu'à la position terminale.

15. Procédé selon l'une des revendication 11 à 14,
**caractérisé**
**en ce que** l'anneau de maintien (6) est, dans la position terminale, soudé par laser à la deuxième pièce de mécanisme (4).

16. Procédé selon la revendication 15,
**caractérisé**
**en ce que** le soudage par laser est effectué en formant un joint ou cordon soudé traversant (32) s'étendant de manière périphérique au moins par secteurs ou partiellement autour de l'anneau de maintien (6).
